# EUROPEAN PATENT APPLICATION

(11) **EP 1 653 147 A2**
(43) Date of publication of application: **03.05.2006**
(21) Application number: 05256797.1
(22) Date of filing: 02.11.2005
(51) Int. Cl.: F16N 29/04

(54) **Grease pressure release tools**

(30) Priority: 02.11.2004 AU 2004100935
(71) Applicant: Custom Fluid Power Pty Limited, Cardiff NSW 2285 (AU)
(72) Inventor: Lake, Rodger, Cardiff, New South Wales 2285 (AU); Sarginson, Terrence, Cardiff, New South Wales 2285 (AU)
(74) Representative: Coles, Graham Frederick

(57) **Abstract**

A tool (10) for visually detecting and releasing grease overpressure from a grease nipple, has a grease coupling (11) that includes a vent opening (40) and is carried by a tube (12) which extends from an insert (13) within a pistol grip (14). A rod or piston (60), which extends within the tube (12) from a position in which its front end (61) covers the vent opening (40), is displaced rearwardly by the overpressure to uncover the vent opening (40) for release of grease from the nipple. The displacement of the piston (60) acts via a bolt (30) within the insert (13) to move an indicator button (15) carried by the bolt (30) to signal the existence of the overpressure.

## Description

The invention pertains to grease pressure release tools.

A wide variety of machines with moving parts utilise grease for lubrication, the grease being introduced, extracted or replenished through one or more grease nipples of the machine. A common grease nipple is, in essence, a check valve that allows grease to be introduced under pressure, but only released or expelled when the spring-loaded ball valve of the nipple is depressed to disable the action of the valve. Unfortunately, grease pressure can accumulate behind the grease nipple in a way that can cause the nipple to be ejected under force with the potential for injuring a person changing the grease nipple and/or persons nearby.

Forces of up to 500 N may be developed in grease systems, which may sometimes be pressurised in the region of 48 Mega Pascals, and serious injuries are known to have occurred during removal of grease nipples from such systems. The applicant is not aware of any device on the market for checking the grease pressure behind a nipple, particularly where the overpressure is low or the grease volume is low.

It is an object of the invention to provide a grease pressure release tool that can be used with safety for checking the existence of grease pressure behind a grease nipple.

According to the invention there is provided a grease pressure release tool, characterised in that it includes a piston that is displaced in response to release of the pressure via the grease coupling of the tool, and that this displacement of the piston is communicated to an indicator to move it for indication of the existence of the pressure.

The indicator may be an indicator button that is coupled to the piston to move in response to the displacement of the piston.

The vent opening may be incorporated in the grease coupling, and more especially may be located in an adaptor of the coupling. The displacement of the piston may uncover the vent opening to release the grease pressure.

The grease coupling may be carried by an extension tube, and the piston may be located within the extension tube. In this case, a button bolt may reciprocate within an insert member that is coupled to the extension tube, the piston extending through the extension tube to the button bolt, and the button bolt moving the indicator in response to the displacement of the piston to indicate the existence of the grease pressure. The insert member may be an insert within a handle which may have the form of a handgrip that extends from the extension tube in the form of a pistol grip.

A grease pressure release tool in accordance with the present invention will now be described, by way of example, with reference to the accompanying drawings, in which:
Figure 1 is a side elevation of the example of grease pressure release tool of the present invention;
Figure 2 is a cross section of an insert that is incorporated in a pistol handgrip of the grease pressure release tool of Figure 1;
Figure 3 is a side elevation of a button bolt that forms a component part of the grease pressure release tool of Figure 1;
Figure 4 is an exploded side elevation of a grease coupling of the grease pressure release tool of Figure 1; and
Figures 5 and 6 show other component parts of the grease pressure release tool of Figure 1.

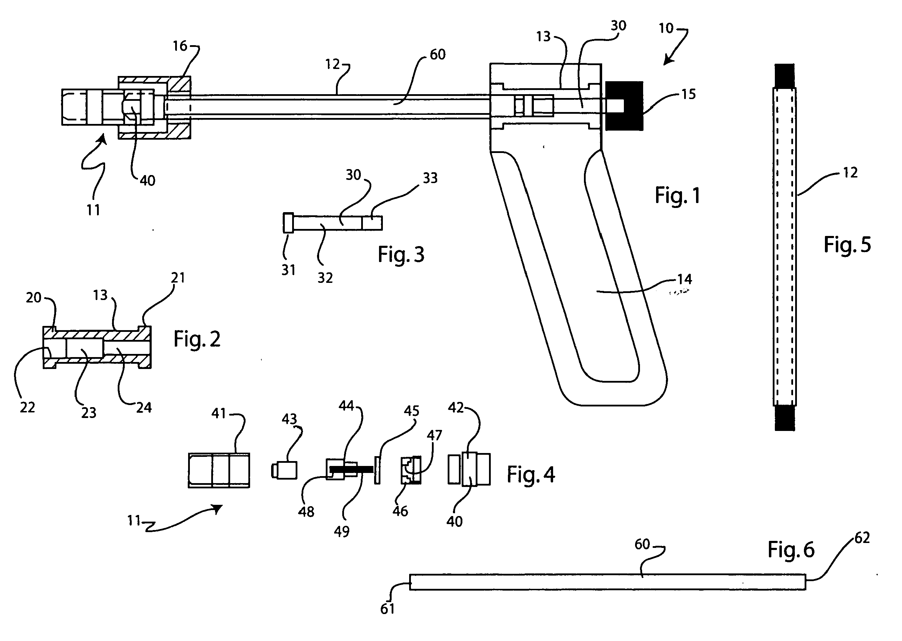

As shown in Figure 1, the example of grease pressure release tool 10 of the invention involves a grease coupling assembly 11 that is carried by an elongated extension tube 12. The front end of the tube 12 screws into the grease coupling assembly 11 and the rear end of the tube 12 screws into, or is otherwise attached to, an insert 13 that is moulded into or otherwise retained by a handgrip handle that has the form of a pistol grip 14.

The coupling assembly 11 has a sliding safety shroud 16 that as shown in Figure 1 is carried by the extension shaft 12 so that it can be slid forwardly for safety into a position (as shown) where it surrounds an opening or vent 40. It can be retracted from this position so as to enable the vent 40 to be visually inspected and the area around it cleaned, if required.

The insert 13 comprises a brass body that in this example and as shown in Figure 2, is formed with a forward flange 20 and a rear flange 21. The forward portion of the insert 13 carries a tapered and threaded fitting 22 that receives the rear end of the extension tube 12. The threaded fitting 22 leads within the insert 13 into a central bore 23 and this leads into a rear bore 24.

A button bolt 30 which is shown in Figure 3 and which reciprocates within the insert 13, has a slotted head 31, a central shaft 32 and a threaded end 33. The head 31 reciprocates within the central bore 23 of the insert 13, and the threaded end 33 of the button bolt 30 extends through the rear face of the insert 13 to screw into a brightly-coloured indicator button 15.

As shown in Figure 4, the grease coupling assembly 11 fitted to the front end of the extension tube 12, is a modified form of a normal coupling assembly for engaging a grease nipple. More particularly, the coupling assembly 11 has a forward shroud 41 which screws onto a rear adaptor 42, and involves relatively-conventional coupling components located within the shroud 41 between the shroud 41 and the adaptor 42. These components comprise a plurality of metallic gripping fingers 43, a nipple seat 44, a washer 45 and a resilient rubber or polymer plug 46 having a central bore 47.

In this example, the seat 44 has a hemispherical front surface 48 for seating sealingly on the grease nipple, and a slotted pin 49 is silver soldered into a central bore of the seat 44 for depressing the nipple's spring-loaded ball or check valve. The slotted pin 49 allows grease from the nipple to travel past the seat 44 to the small opening or vent 40 in the adaptor 42. The resilient rubber plug 46 abuts the washer 45 and straddles the seat 44 in a way that allows the rear portions of the gripping fingers 43 to be resiliently biased by the plug 46.

It is important to note that the adaptor 42 in addition to having front threads for engaging the shroud 41 and a rear threaded-opening into which the extension tube 12 screws, incorporates the small opening or vent 40 (of about 1 mm in diameter) to enable fluid communication to and from the interior of the adaptor 42.

The extension tube 12, as shown in Figure 5, is a straight hollow tube having tapered and threaded male connectors at each end. A reciprocating rod or piston 60 shown in Figure 6, is located within the tube 12 to have its front end 61 just forward of the vent 40 of the adaptor 42 and its rear end 62 in abutment with the slotted head 31 of the button bolt 30 when the button bolt 30 and therefore the indicator button 15, are in their forward-most positions.

The operation of the tool proceeds as follows. Before a grease nipple is serviced, particularly if the grease nipple is to be removed, the indicator button 15 of the tool 10 is pressed in. This urges the rod or piston 60 into its forward-most position, the front end of the rod 60 being just forward of the vent 40. The grease coupling assembly 11 of the tool 10 is then engaged over the grease nipple and pressed onto it using the handle 14 so as to cause the slotted pin 49 to depress the ball of the grease nipple. Because the front surface 48 of the seat 44 is in contact with the nipple, any grease pressure that has accumulated behind the nipple escapes through the slotted pin 49. The escaping grease thus makes contact with the front surface 61 of the rod or piston 60 to urge the rod or piston 60 rearwards. This causes the vent 40 to be revealed or uncovered by the rod 60 so that excess grease can escape through it.

The movement of the rod or piston 60 rearwards also causes rearward movement of the button bolt 30 and of the indicating button 15 with it to give indication of existence of the grease pressure. It is preferred that the operator monitors the movement of the indicating button 15 because the escape of grease from the vent 40 may be obscured by the safety shroud 16.

In the event that the indicator button 15 has been displaced fully to the rear, and the operator believes that all the grease pressure has been relieved, he/she may re-test the nipple to confirm this by depressing the button 15 again and reintroducing the grease coupling 11 to the nipple. If the indicating button 15 fails to move, there is no longer a dangerous accumulation of grease pressure on the nipple.

The tool 10 has the advantage of being a relatively small and simple hand-held device which can be used by either left- or right-handed operators to monitor and detect grease pressure as well as to relieve it, so as to enable grease nipples to be removed with safety.

While the present invention has been described with reference to particular details of construction, these should be understood to have been provided by way of example and not as limitations to the scope of spirit or the invention. In particular, the shape and configuration of the handle 14 is merely one example of a tool-configuration which is considered ergonomically sensible. The shape or presence of a gun-shaped handle is not considered absolutely essential to the teachings of the invention. Similarly, the length of the extension tube 12 can be changed to whatever is convenient for the user.

## Claims

1. A grease pressure release tool (10), **characterised in that** it includes a piston (60) that is displaced in response to release of the pressure via the grease coupling (11) of the tool (10), and that this displacement of the piston (60) is communicated to an indicator (15) to move it for indication of the existence of the pressure.

2. A grease pressure release tool according to Claim 1 wherein the indicator is an indicator button (15), the indicator button (15) being coupled to the piston (60) to move in response to the displacement of the piston (60).

3. A grease pressure release tool according to Claim 1 or Claim 2 wherein the grease coupling incorporates a vent opening (40) for release of the grease pressure.

4. A grease pressure release tool according to Claim 3 wherein the displacement of the piston (60) uncovers the vent opening (40) to release the grease pressure.

5. A grease pressure release tool according to Claim 3 or Claim 4 wherein the vent opening (40) is located in an adaptor (42) of the grease coupling (11).

6. A grease pressure release tool according to any one of Claims 3 to 5 wherein a safety shroud is slidable selectively between positions in which the vent opening is respectively shrouded and unshrouded by it.

7. A grease pressure release tool according to any one of Claims 1 to 6 wherein the grease coupling (11) is carried by an extension tube (12), and the piston (60) is located within the extension tube (12).

8. A grease pressure release tool according to Claim 7 wherein a button bolt (30) reciprocates within an insert member (13) that is coupled to the extension tube (12), the piston (60) extends through the extension tube (12) to the button bolt (30), and the button bolt (30) moves the indicator (15) in response to the displacement of the piston (60) to indicate the existence of the grease pressure.

9. A grease pressure release tool according to Claim 8 wherein the insert member is an insert (13) within a handle (14) of the tool.

10. A grease pressure release tool according to Claim 9 wherein the handle has the form of a handgrip (14).

11. A grease pressure release tool according to Claim 10 wherein the handgrip extends from the extension tube (12) in the form of a pistol grip (14).

12. A grease pressure release tool according to any one of Claims 1 to 11 wherein the grease coupling (11) has an internal seat (44) for seating sealingly on a grease nipple, through which grease from the nipple may pass.
